# EUROPÄISCHE PATENTSCHRIFT

(11) **EP 2 499 993 B1**
(45) Veröffentlichungstag und Bekanntmachung des Hinweises auf die Patenterteilung: **10.07.2013**
(21) Anmeldenummer: 12157250.7
(22) Anmeldetag: 28.02.2012
(51) Int. Cl.: A61C 13/00, B23B 31/107

(54) **System zur Herstellung zahntechnischer Formteile**
System for producing dental moulds
Système de fabrication de pièces de formage dentaires

(30) Priorität: 18.03.2011 DE 102011005797
(43) Veröffentlichungstag der Anmeldung: 19.09.2012
(73) Patentinhaber: Kaltenbach & Voigt GmbH, 88400 Biberach (DE)
(72) Erfinder: Gapp, Wolfgang, 88410 Bad Wurzach (DE); Steinhauser, Pius, 88299 Leutkirch (DE)
(74) Vertreter: Thun, Clemens

(56) Entgegenhaltungen:
- DE-A1- 19 733 161
- DE-A1-102008 030 050
- US-A1- 2010 028 834

## Beschreibung

Die Erfindung betrifft ein System zur Herstellung zahntechnischer Formteile aus Rohlingen, das eine Bearbeitungsmaschine zur abhebenden Bearbeitung eines Rohlings aufweist, sowie einen Werkstückhalter zur Fixierung des Rohlings bei der Bearbeitung, wobei die Bearbeitungsmaschine eine Halterung für den Werkstückhalter aufweist und wobei der Werkstückhalter einen Schaftbereich aufweist, der reversibel in die Halterung eingesetzt und im eingesetzten Zustand in der Halterung lagefixiert werden kann.

Ein derartiges System ist aus der DE 19733161 A1 oder aus der DE 10 2008 030 050 A1 bekannt. Mit diesem System lässt sich der Werkstückhalter exakt und reproduzierbar in der Halterung der Bearbeitungsmaschine arretieren. Allerdings kann es bei diesem bekannten System dazu kommen, dass - insbesondere bei vergleichsweise lang geformten Rohlingen- die Spannkraft, mit der der Werkstückhalter in der Halterung lagefixiert ist, derart limitiert ist, dass ein bestimmtes gewünschtes Maß an Präzision bei der Bearbeitung des Rohlings nicht mehr erreicht werden kann.

Der Erfindung liegt die Aufgabe zugrunde, ein entsprechendes verbessertes System anzugeben; insbesondere soll dabei eine besonders gute Lagefixierung des Werkstückhalters in der Halterung ermöglicht sein.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angegeben.

Gemäß der Erfindung ist ein System zur Herstellung zahntechnischer Formteile aus Rohlingen vorgesehen, das eine Bearbeitungsmaschine zur abhebenden Bearbeitung eines Rohlings aufweist, sowie einen Werkstückhalter zur Fixierung des Rohlings bei der Bearbeitung. Die Bearbeitungsmaschine weist dabei eine Halterung für den Werkstückhalter auf und der Werkstückhalter weist einen Schaftbereich auf, der reversibel in die Halterung eingesetzt und im eingesetzten Zustand in der Halterung lagefixiert werden kann. Weiterhin weist das System ein Hebelelement auf, wobei das System derart ausgebildet ist, dass das Hebelelement zur Lagefixierung des Schaftbereichs in der Halterung zwischen der Halterung einerseits und dem Schaftbereich andererseits eingespannt werden kann.

Durch ein entsprechendes Einspannen des Hebelelements lässt sich eine besonders hohe Spannkraft erzeugen, mit der der Schaftbereich des Werkstückhalters in der Halterung lagefixiert werden kann.

Vorteilhaft weist das System außerdem einen Gewindestift auf, der derart drehbar in eine Gewindebohrung des Hebelelements eingesetzt ist, dass er zum Einspannen des Hebelelements zwischen der Halterung und dem Schaftbereich durch eine Drehung in der Gewindebohrung gegen eine Druckfläche des Schaftbereichs gedrückt werden kann. Hierdurch lässt sich das Hebelelement besonders wirksam und unter vergleichsweise einfacher Handhabung zwischen dem Schaftbereich und der Halterung einspannen bzw. einklemmen.

Vorteilhaft bildet das Hebelelement einen zweiseitigen Hebel, vorzugsweise einen Winkelhebel, der zwischen der Halterung und dem Schaftbereich wirkt. Hierdurch lassen sich besonders effektive Hebelverhältnisse für das Einspannen des Schaftbereichs des Werkstückhalters in die Halterung erzielen. Vorzugsweise ist dabei die Gewindebohrung mit Bezug auf einen Drehpunkt des Hebelelements auf einer ersten Seite des zweiseitigen Hebels angeordnet. Weiterhin vorzugsweise weist das Hebelelement mit Bezug auf den Drehpunkt des Hebelelements auf einer, der ersten Seite gegenüber liegenden zweiten Seite wenigstens eine Anlagefläche zur Anlage an den Schaftbereich auf. Hierdurch lässt sich eine besonders gute Übersetzung beim Einspannen erzielen. Besonders vorteilhaft können dabei eine erste Anlagefläche und eine zweite Anlagefläche ausgebildet sein.

Vorzugsweise weist der Schaftbereich einen ersten planen Flächenbereich und einen zweiten planen Flächenbereich auf, wobei der zweite plane Flächenbereich nicht parallel zu dem ersten planen Flächenbereich ausgebildet ist und wobei weiterhin die Halterung einen ersten planen Flächenbereich und einen zweiten planen Flächenbereich aufweist, derart, dass beim Einspannen des Hebelelements der erste plane Flächenbereich des Schaftbereichs flächig den ersten planen Flächenbereich der Halterung kontaktiert und der zweite plane Flächenbereich des Schaftelements den zweiten planen Flächenbereich der Halterung. Weiterhin vorteilhaft weist dabei der Schaftbereich eine Längsachse auf, wobei der erste plane Flächenbereich des Schaftbereichs und der zweite plane Flächenbereich des Schaftbereichs jeweils parallel zu der Längsachse verlaufend ausgebildet sind.

Die Erfindung wird im Folgenden anhand eines Ausführungsbeispiels und mit Bezug auf die Zeichnungen näher erläutert. Es zeigen:
- Fig. 1: eine Skizze des Systems gemäß dem Ausführungsbeispiel im Bereich der Halterung für den Werkstückhalter,
- Fig. 2: den separierten Werkstückhalter mit dem darauf angeordneten Rohling,
- Fig. 3: einen Längsschnitt durch den Bereich um die Halterung und
- Fig. 4: einen Querschnitt auf Höhe des Schaftbereichs des Werkstückhalters.

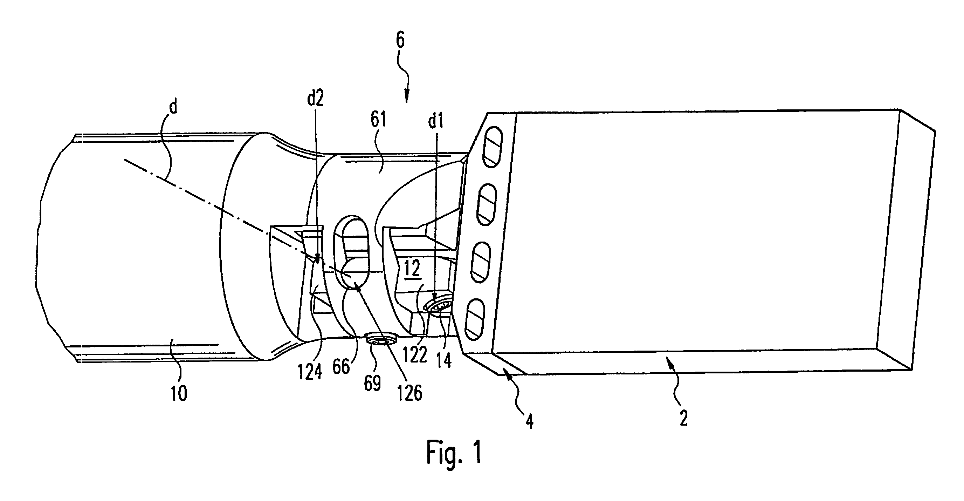

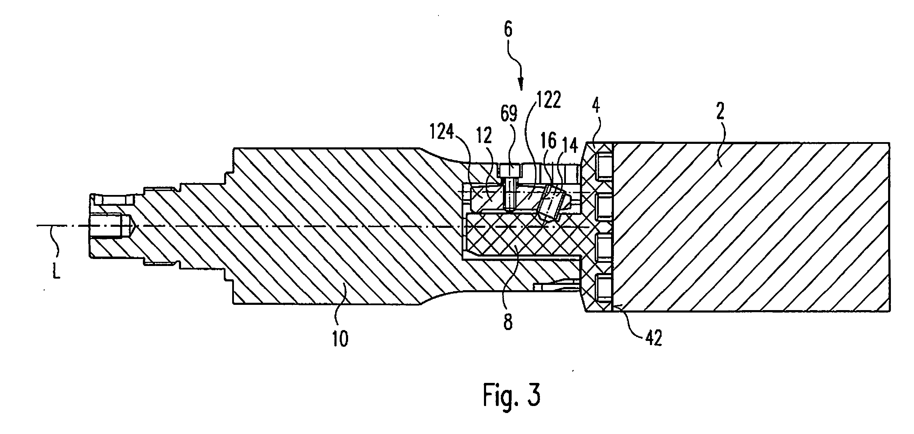

In Fig. 1 ist ein, die Erfindung betreffender Bereich eines erfindungsgemäßen Systems zur Herstellung zahntechnischer Formteile aus Rohlingen skizziert. Das System umfasst eine (in ihrer Gesamtheit nicht gezeigte) Bearbeitungsmaschine zur abhebenden Bearbeitung eines Rohlings 2. Die Bearbeitungsmaschine weist einen Werkstückhalter 4 zur Fixierung des Rohlings 2 bei der Bearbeitung zur Herstellung eines zahntechnischen Formteils aus dem Rohling 2 auf. In Fig. 3 ist eine entsprechende Schnittdarstellung gezeigt. Der Werkstückhalter 4 kann insbesondere eine plane Fläche 42 aufweisen, die zur Anordnung des Rohlings 2 vorgesehen ist.

Weiterhin weist die Bearbeitungsmaschine eine Halterung 6 für den Werkstückhalter 4 auf und der Werkstückhalter 4 weist einen Schaftbereich 8 auf, der reversibel in die Halterung 6 eingesetzt und im eingesetzten Zustand - vorzugsweise ebenfalls reversibel - in der Halterung 6 lagefixiert werden kann. Dementsprechend ist der Werkstückhalter 4 vorzugsweise derart ausgestaltet, dass der Schaftbereich 8 unbeweglich gegenüber der planen Fläche 42 ist. Insbesondere kann der Werkstückhalter 8 einstückig ausgebildet sein.

Die Halterung 6 kann, wie in den Figuren exemplarisch gezeigt, an einem Endbereich eines Wellenelements 10, beispielsweise einer Spannwelle der Bearbeitungsmaschine ausgebildet sein.

Der Schaftbereich 8 des Werkstückhalters 4 kann länglich sein, so dass durch die Form des Schaftbereichs 8 eine, in Fig. 3 exemplarisch bezeichnete, Längsachse L festgelegt werden kann. Die Schnittdarstellung der Fig. 3 stellt in diesem Sinne einen Längsschnitt dar. Die Längsachse *L* kann normal zu der planen Fläche 42 verlaufend orientiert sein.

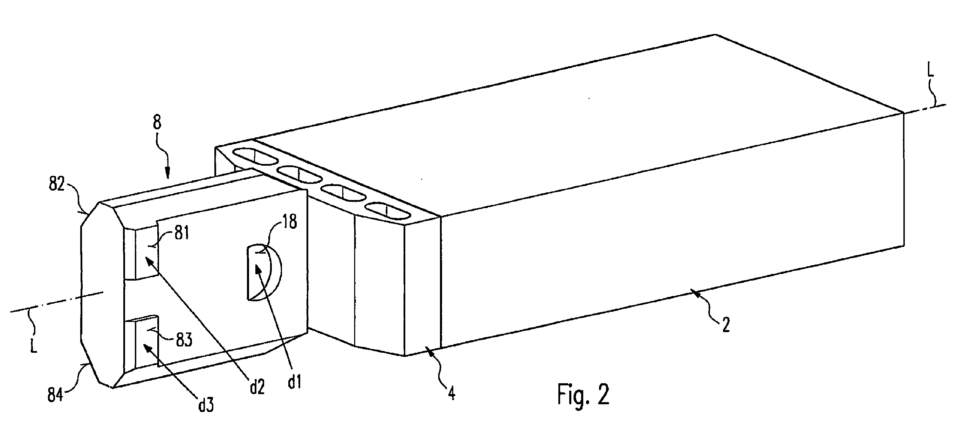

In Fig. 2 ist der Werkstückhalter 4 mit dem darauf angeordneten Rohling 2 in separierter Form dargestellt.

Die Halterung 6 kann einen - exemplarisch in Fig. 1 bezeichneten - Ringteil 61 umfassen, der - bei eingesetztem und lagefixiertem Schaftbereich 8 des Werkstückhalters 6 - den Schaftbereich 8 ringförmig umschließend, insbesondere ringförmig um die Längsachse *L* umschließend, umgreift.

Weiterhin weist das System ein Hebelelement 12 auf. Das System ist dabei derart ausgebildet, dass das Hebelelement 12 zur Lagefixierung des Schaftbereichs 8 in der Halterung 6 zwischen der Halterung 6 einerseits und dem Schaftbereich 8 andererseits eingespannt werden kann. Beispielsweise kann die Ausgestaltung derart sein, dass sich das Hebelelement 12 im eingespannten Zustand an einem Auflagebereich des Ringteils 61 abstützt.

Durch ein derartiges Einspannen lässt sich eine besonders hohe Spannkraft zur Lagefixierung des Schaftbereichs 8 bzw. des Werkstückhalters 4 in der Halterung 6 bewirken. Auf diese Weise kann beispielsweise erzielt werden, dass ein Titan-Rohling mit einer Erstreckung längs der Längsachse *L* von circa 70 mm abhebend mit ausreichender bzw. besonders hoher Präzision bearbeitet werden kann.

Vorteilhaft weist das System außerdem einen Gewindestift 14 auf, der derart drehbar in eine Gewindebohrung 16 des Hebelelements 12 eingesetzt ist, dass er zum Einspannen des Hebelelements 12 zwischen der Halterung 6 und dem Schaftbereich 8 durch eine Drehung in der Gewindebohrung 16 gegen eine Druckfläche 18 des Schaftbereichs 8 gedrückt werden kann. Hierdurch lässt sich das Hebelelement 12 besonders wirksam und unter vergleichsweise einfacher Handhabung zwischen dem Schaftbereich 8 und der Halterung 6 einklemmen. Durch ein entsprechendes Drehen des Gewindestiftes 14 in der Gewindebohrung 16 lässt sich die Spannkraft besonders gut erhöhen, mit der der Schaftbereich 8 in der Halterung 6 eingespannt ist.

Vorzugsweise ist die Druckfläche 18 geneigt, also nicht parallel zur Längsachse *L* ausgebildet. Beispielsweise kann vorgesehen sein, dass die Druckfläche 18 mit der Längsachse *L* einen Winkel einschließt, der zwischen 10° und 30° beträgt. Die Druckfläche 18 kann derart gestaltet sein, dass eine Flächennormale der Druckfläche 18 eine Komponente aufweist, die in Richtung auf die plane Fläche 42 des Werkstückhalters 4 weist.

Verteilhaft bildet das Hebelelement 12 einen zweiseitigen Hebel, vorzugsweise einen Winkelhebel, der zwischen der Halterung 6 und dem Schaftbereich 8 wirkt. Hierdurch kann das Hebelelement 12 sozusagen eine Wippe bilden, die als Winkelhebel zwischen der Halterung 6 und dem Schaftbereich 8 wirkt. In Fig. 1 ist ein entsprechender Drehpunkt 126 bzw. eine Drehachse *d* des als Wippe wirkenden Hebelelements 12 bezeichnet. Die Drehachse *d* ist dabei vorzugsweise - wenn der Werkstückhalter 4 wie vorgesehen in die Halterung 6 eingesetzt ist - normal zu der Längsachse *L* des Schaftbereichs 8 verlaufend orientiert gebildet. Die Ausgestaltung ist weiterhin vorzugsweise derart, dass die Drehachse *d* das Ringteil 61 durchsetzt. Die Halterung 6 kann insbesondere ein Auflager 66 zur Unterstützung des Hebelelements 12 zur Bildung der Drehachse *d* aufweisen. Das Auflager 66 ist vorzugsweise an dem Ringteil 61 ausgebildet.

Durch eine derartige Ausgestaltung des Hebelelements 12 lassen sich besonders effektive Hebelverhältnisse zum Einspannen des Werkstückhalters 4 in der Halterung 6 erzielen.

Vorzugsweise ist dabei die Gewindebohrung 16 mit Bezug auf den Drehpunkt 126 bzw. die Drehachse *d* des Hebelelements 12 auf einer ersten Seite 122 des zweiseitigen Hebels angeordnet. Hierdurch lässt sich die Spannkraft, ausgehend von dem Gewindestift 14 durch den Drehpunkt 126 bzw. die Drehachse *d* vorteilhaft übersetzen. Zugleich wird der wirksame Hebelarm zur Abstützung des Werkstückhalters 4 im Vergleich zu einer Einfachabstützung vergrößert, beispielsweise verdreifacht.

Weiterhin vorzugsweise ist auf der entsprechenden zweiten Seite 124 des zweiseitigen Hebels wenigstens eine Anlagefläche zur Anlage an den Schaftbereich 4 gebildet. Hierdurch lassen sich besonders gute Hebelverhältnisse für das Einspannen erzielen. Beispielsweise können zwei derartige Anlageflächen am Hebelelement 12 vorgesehen sein, die insbesondere längs der Drehachse *d* betrachtet einen Abstand voneinander aufweisen.

Der Schaftbereich 8 kann hierzu korrespondierende Aufnahmeflächen 81, 83 aufweisen. Auf diese Weise lässt sich das Hebelelement 12 über drei Punkte *d1, d2, d3* gegen den Schaftbereich 8 spannen, wobei ein erster Punkt *d1* durch den Kontaktpunkt des Gewindestifts 14 auf der Druckfläche 18 gebildet ist und die beiden weiteren Punkte *d2, d3* durch die beiden unmittelbaren Kontaktpunkte zwischen den Anlageflächen auf der zweiten Seite des durch das Hebelelement 12 gebildeten Hebels einerseits und den hierzu korrespondierenden Aufnahmeflächen 81, 83 des Schaftbereichs 8 andererseits gebildet sind. Hierdurch kann eine vorteilhafte Dreipunkt-Spannung erzielt werden.

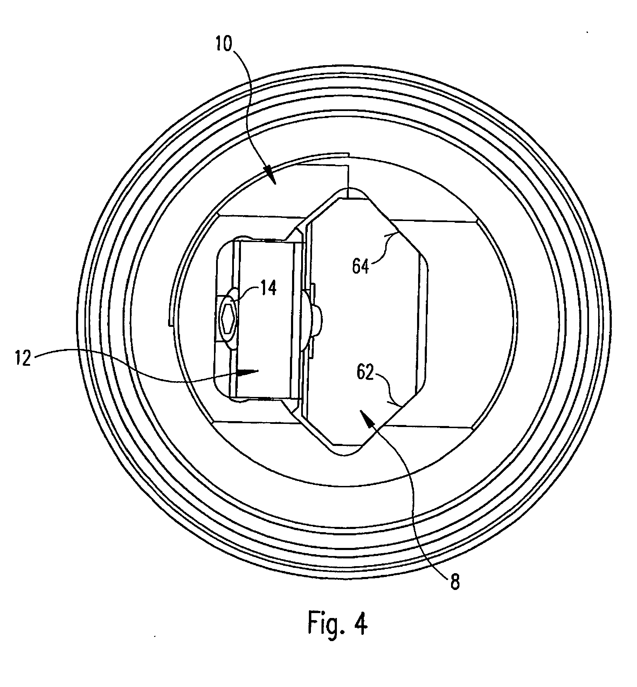

Wie exemplarisch in Fig. 4 gezeigt, weist vorzugsweise der Schaftbereich 8 einen ersten planen Flächenbereich 82 und einen zweiten planen Flächenbereich 84 auf, wobei der zweite plane Flächenbereich 84 nicht parallel zu dem ersten planen Flächenbereich 82 ausgebildet ist und wobei weiterhin die Halterung 6 einen ersten planen Flächenbereich 62 und einen zweiten planen Flächenbereich 64 aufweist, derart, dass beim Einspannen des Hebelelements 12 der erste plane Flächenbereich 82 des Schaftbereichs 8 flächig den ersten planen Flächenbereich 62 der Halterung 6 kontaktiert und der zweite plane Flächenbereich 84 des Schaftelements 8 den zweiten planen Flächenbereich 64 der Halterung 6. Durch die beiden planen Flächenbereiche 82, 84 des Schaftbereichs 8 kann sozusagen eine Doppelkeilform gebildet sein und durch die beiden planen Flächenbereiche 62, 64 der Halterung eine hierzu entsprechend kongruente Anlage gebildet sein, derart, dass beim Einspannen des Hebelelements 12 der Schaftbereich 8 gegen die Anlage gedrückt wird und dadurch zentriert wird und eine exakte Ausrichtung erhält.

Weiterhin vorteilhaft sind hierzu der erste plane Flächenbereich 82 des Schaftbereichs 8 und der zweite plane Flächenbereich 84 des Schaftbereichs 8 jeweils parallel zu der Längsachse *L* verlaufend ausgebildet.

Der erste plane Flächenbereich 62 und der zweite plane Flächenbereich 64 der Halterung 6 können vorteilhaft zumindest teilweise an dem Ringteil 61 ausgebildet sein.

Der erste plane Flächenbereich 82 und der zweite plane Flächenbereich 84 des Schaftbereichs 8 sind vorteilhaft mit Bezug auf die Längsachse L des Schaftbereichs 8 auf einer der Druckfläche 18 und den Aufnahmeflächen 81, 83 gegenüberliegenden Seite ausgebildet. Auf diese Weise wird beim Einspannen der Schaftbereich 8 mit seinen beiden planen Flächenbereichen 82, 84 gegen die beiden entsprechend dazu kongruenten planen Flächenbereiche 62, 64 der Halterung 6 gedrückt und hierdurch eine vorteilhafte effektive, definierte Ausrichtung des Schaftbereichs 8 und somit des Werkstückhalter 4 in der Halterung 6 erzielt. Mit anderen Worten wird die Doppelkeilform des Werkstückhalters 4 von dem als Wippe wirkenden Hebelelement 12 gegen den kongruenten "Doppelkeil" in dem Wellenelement bzw. in der Halterung 6 gespannt.

Das Hebelelement 12 kann, beispielsweise mittels einer Schraube 69, unverlierbar an der Halterung 6, insbesondere an dem Ringteil 61 angeordnet sein.

## Patentansprüche

1. System zur Herstellung zahntechnischer Formteile aus Rohlingen, aufweisend
- eine Bearbeitungsmaschine zur abhebenden Bearbeitung eines Rohlings (2),
- einen Werkstückhalter (4) zur Fixierung des Rohlings (2) bei der Bearbeitung, wobei die Bearbeitungsmaschine eine Halterung (6) für den Werkstückhalter (4) aufweist und
wobei der Werkstückhalter (4) einen Schaftbereich (8) aufweist, der reversibel in die Halterung (6) eingesetzt und im eingesetzten Zustand in der Halterung (6) lagefixiert werden kann,
**gekennzeichnet durch**
- ein Hebelelement (12), wobei das System derart ausgebildet ist, dass das Hebelelement (12) zur Lagefixierung des Schaftbereichs (8) in der Halterung (6) zwischen der Halterung (6) einerseits und dem Schaftbereich (8) andererseits eingespannt werden kann.

2. System nach Anspruch 1,
weiterhin aufweisend
- einen Gewindestift (14), der derart drehbar in eine Gewindebohrung (16) des Hebelelements (12) eingesetzt ist, dass er zum Einspannen des Hebelelements (12) zwischen der Halterung (6) und dem Schaftbereich (8) durch eine Drehung in der Gewindebohrung (16) gegen eine Druckfläche (18) des Schaftbereichs (8) gedrückt werden kann.

3. System nach Anspruch 1 oder 2,
bei dem das Hebelelement (12) einen zweiseitigen Hebel, vorzugsweise einen Winkelhebel bildet, der zwischen der Halterung (6) und dem Schaftbereich (8) wirkt.

4. System nach Anspruch 3,
bei dem die Gewindebohrung (16) mit Bezug auf einen Drehpunkt (126) des Hebelelements (12) auf einer ersten Seite (122) des zweiseitigen Hebels angeordnet ist.

5. System nach Anspruch 4,
bei dem das Hebelelement (12) mit Bezug auf den Drehpunkt (126) des Hebelelements (12) auf einer, der ersten Seite (122) gegenüber liegenden, zweiten Seite (124) wenigstens eine Anlagefläche zur Anlage an den Schaftbereich (8) aufweist.

6. System nach Anspruch 5,
bei dem das Hebelelement (12) auf der zweiten Seite (124) eine erste Anlagefläche und eine zweite Anlagefläche zur Anlage an den Schaftbereich (8) aufweist.

7. System nach einem der vorhergehenden Ansprüche,
bei dem der Schaftbereich (8) einen ersten planen Flächenbereich (82) und einen zweiten planen Flächenbereich (84) aufweist, der nicht parallel zu dem ersten planen Flächenbereich (82) ausgebildet ist und
bei dem die Halterung (6) einen ersten planen Flächenbereich (62) und einen zweiten planen Flächenbereich (64) aufweist, derart, dass beim Einspannen des Hebelelements (12) der erste plane Flächenbereich (82) des Schaftbereichs (8) flächig den ersten planen Flächenbereich (62) der Halterung (6) kontaktiert und der zweite plane Flächenbereich (84) des Schaftelements (8) den zweiten planen Flächenbereich (64) der Halterung (6).

8. System nach Anspruch 7,
bei dem der Schaftbereich (8) eine Längsachse (L) aufweist und der erste plane Flächenbereich (82) des Schaftbereichs (8) und der zweite plane Flächenbereich (84) des Schaftbereichs (8) jeweils parallel zu der Längsachse (L) verlaufend ausgebildet sind.

## Claims

1. A system for producing dental mouldings from blanks, having
- a machine tool for machining a blank (2),
- a workpiece holder (4) for securing the blank (2) during machining,
wherein the machine tool has a mount (6) for the workpiece holder (4), and
wherein the workpiece holder (4) has a shank region (8) which can be inserted reversibly into the mount (6) and in the inserted state can be secured in position in the mount (6),
**characterized by**
- a lever element (12), wherein the system is configured so that the lever element (12) can be clamped between the mount (6) on one side and the shank region (8) on the other side in order to secure the shank region (8) in position in the mount (6).

2. A system according to claim 1,
further having
- a threaded pin (14) which is inserted in a rotatable manner into a threaded bore (16) in the lever element (12) so that it can be pressed against a pressure surface (18) of the shank region (8) by rotation in the threaded bore (16) in order to clamp the lever element (12) between the mount (6) and the shank region (8).

3. A system according to claim 1 or 2,
in which the lever element (12) forms a two-sided lever, preferably an angle lever, which acts between the mount (6) and the shank region (8).

4. A system according to claim 3,
in which the threaded bore (16) is arranged, with regard to a pivot point (126) of the lever element (12), on a first side (122) of the two-sided lever.

5. A system according to claim 4,
in which the lever element (12) has, with regard to the pivot point (126) of the lever element (12), on a second side (124) opposite the first side (122), at least one abutment surface for abutment against the shank region (8).

6. A system according to claim 5,
in which the lever element (12) has, on the second side (124), a first abutment surface and a second abutment surface for abutment against the shank region (8).

7. A system according to one of the preceding claims,
in which the shank region (8) has a first planar surface region (82) and a second planar surface region (84) which is configured so that it is not parallel to the first planar surface region (82), and
in which the mount (6) has a first planar surface region (62) and a second planar surface region (64) so that, when the lever element (12) is clamped, the first planar surface region (82) of the shank region (8) comes into surface contact with the first planar surface region (62) of the mount (6), and the second planar surface region (84) of the shank element (8) comes into surface contact with the second planar surface region (64) of the mount (6).

8. A system according to claim 7,
in which the shank region (8) has a longitudinal axis (L) and the first planar surface region (82) of the shank region (8) and the second planar surface region (84) of the shank region (8) are configured so that they each extend parallel to the longitudinal axis (L).

## Revendications

1. Système de fabrication de pièces moulées de dentisterie à partir d'ébauches, présentant
- une machine d'usinage pour l'usinage par enlèvement d'une ébauche (2),
- un support de pièce usinée (4) pour fixer l'ébauche (2) lors de l'usinage,
la machine d'usinage présentant une fixation (6) du support de pièce usinée (4), et
dans lequel le support de pièce usinée (4) présente une zone de tige (8) qui s'insère de façon réversible dans la fixation (6) et peut être maintenue en position à l'état inséré dans la fixation (6),
**caractérisé par**
- un élément de levier (12), le système étant conçu de telle sorte que l'élément de levier (12) puisse être monté pour la fixation en position de la zone de tige (8) dans la fixation (6) entre la fixation (6) d'une part et la zone de tige (8) d'autre part.

2. Système selon la revendication 1,
présentant en outre
- une tige filetée (14) qui est insérée de façon à pouvoir tourner dans un taraudage (16) de l'élément de levier (12) de telle sorte qu'elle puisse être poussée pour le montage de l'élément de levier (12) entre la fixation (6) et la zone de tige (8) par une rotation dans le taraudage (16) contre une surface d'impression (18) de la zone de tige (8).

3. Système selon la revendication 1 ou 2,
dans lequel l'élément de levier (12) forme un levier à deux côtés, de préférence, un levier coudé qui agit entre la fixation (6) et la zone de tige (8).

4. Système selon la revendication 3,
dans lequel le taraudage (16) est disposé par rapport à un point de rotation (126) de l'élément de levier (12) sur un premier côté (122) du levier à deux côtés.

5. Système selon la revendication 4,
dans lequel l'élément de levier (12) présente par rapport au point de rotation (126) de l'élément de levier (12) sur un deuxième côté (124) opposé au premier côté (122), au moins une surface d'appui pour l'appui sur la zone de tige (8).

6. Système selon la revendication 5,
dans lequel l'élément de levier (12) présente sur le deuxième côté (124) une première surface d'appui et une deuxième surface d'appui pour l'appui sur la zone de tige (8).

7. Système selon l'une des revendications précédentes,
dans lequel la zone de tige (8) présente une première surface plane (82) et une deuxième surface plane (84) qui n'est pas parallèle à la première surface plane (82) et
dans lequel la fixation (6) présente une première surface plane (62) et une deuxième surface plane (64) de telle sorte que lors du montage de l'élément de levier (12), la première surface plane (82) de la zone de tige (8) soit en contact sur toute la première surface plane (62) de la fixation (6) et que la deuxième surface plane (84) de l'élément de tige (8) soit en contact sur toute la deuxième surface (64) de la fixation (6).

8. Système selon la revendication 7,
dans lequel la zone de tige (8) présente un axe longitudinal (L) et la première surface plane (82) de la zone de tige (8) et la deuxième surface plane (84) de la zone de tige (8) sont conçues de façon parallèle à l'axe longitudinal (L).
